Europäisches Patentamt

European Patent Office

Office européen des brevets

(19)

(11) Veröffentlichungsnummer: **0 304 835 B1**

(12)

# EUROPÄISCHE PATENTSCHRIFT

(45) Veröffentlichungstag der Patentschrift :
03.07.91 Patentblatt 91/27

(51) Int. Cl.⁵ : **A01B 15/14**

(21) Anmeldenummer : 88113572.7

(22) Anmeldetag : 20.08.88

(54) **Pflug.**

(30) Priorität : 28.08.87 DE 3728791
19.11.87 DE 3739140

(43) Veröffentlichungstag der Anmeldung :
01.03.89 Patentblatt 89/09

(45) Bekanntmachung des Hinweises auf die
Patenterteilung :
03.07.91 Patentblatt 91/27

(84) Benannte Vertragsstaaten :
AT CH DE ES FR GB IT LI NL SE

(56) Entgegenhaltungen :
EP-A- 0 047 580
AT-B- 381 829

(56) Entgegenhaltungen :
DE-A- 2 921 134
DE-B- 1 168 148
DE-U- 7 830 864
FR-A- 1 411 403
FR-A- 2 517 505

(73) Patentinhaber : Bayerische Pflugfabrik GmbH
von-Kühlmann-Strasse 25
W-8910 Landsberg a. Lech (DE)

(72) Erfinder : Pöttinger, Klaus, Dipl.Ing.
Rossmarkt 23
A-4710 Grieskirchen (AT)

(74) Vertreter : Dupal, Helmut, Dipl-Ing.
Jägerweg 12
A-4702 Wallern (AT)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Pflug mit den Merkmalen des Gattungsbegriffes des Anspruches 1.

Bei Pflügen dieser Art kann die Einstellung von Vorfurchenbreite des Pfluges und Führungspol des Schleppers nur durch wiederholtes Nachstellen der dafür vorgesehenen Einstellvorrichtungen erfolgen. Diese Einstellungen richtig vorzunehmen ist in der Praxis umständlich und wegen der gegenseitigen Beeinflussung der Einstellungen schwierig.

Aus der DE-AS 11 68 148 sind die theoretischen Grundlagen für die richtige Einstellung der Pflüge bekannt geworden, ebenso wie einige praktische Möglichkeiten zu deren Ausführung. Es wird insbesonders in der Fig.5 und der zugehörigen Beschreibung dieser Druckschrift eine Möglichkeit dargestellt und beschrieben, welche die Einstellung des Drehpoles des Pflugrahmens zum Schlepper und damit zum Führungs-oder Zugpol des Gelenkviereckes, das durch die Unterlenker des Schleppers gebildet ist, durch Einstellung des Gelenkviereckes des Pfluges ermöglichen. Diese vorgeschlagene Einstellung ist aber hinsichtlich der Art ihres Anbringungsortes ungünstig.

Aus der AT 381.829 ist eine Anordnung zur Einstellung bekannt geworden, bei der die in Bezug auf die Arbeitsrichtung des Pfluges hinten liegenden Anlenkpunkte der Längslenker des Vierstabgetriebes, auf einer Querstrebe angebracht sind. Die Anpassung des Gelenkviereckes an das Viergelenk der Unterlenker einer Schlepperkategorie wird dann durch Einsetzen einer Querstrebe angepaßter Länge vorgenommen, sodaß für die jeweiligen Abmessungen des Unterlenkergetriebes einer Schlepperkategorie eine entsprechende Querstrebe vorgesehen werden muß.

In der erstgenannten DE-AS 11 68 148 werden weiters für Einstellung des Führungspoles unabhängig von der Einstellung der Vorfurchenbreite des Pfluges mehrere Anordnungen angegeben, die dort in Fig. 3 und 6 zeichnerisch wiedergegeben und im Text beschrieben sind.

Die Erfindung hat die Aufgabe eine in der Praxis brauchbare Einstellmöglichkeit zu schaffen, die nach Kenntnis der Unterlenkerabmessungen des Schleppers eine einfache und rasche Abstimmung des Gesamtgetriebes – schlepperseitiger und pflugseitiger Getriebeteil – ermöglicht.

Diese Aufgabe wird bei einem Pflug mit den Merkmalen des Gattungsbegriffes von den im kennzeichnenden Teil des Anspruches 1 angegebenen Merkmalen gelöst.

Die Unteransprüche 2 bis 7 bilden gleichzeitig einen Teil der Beschreibung und betreffen Merkmale besonders vorteilhafter Ausführungsformen.

Die feinstufige oder stufenlose Veränderung des Abstandes der hinteren Schwenkachsen des Gelenkviereckes des Pfluges ermöglicht es mit einer einzigen Bauart der Einstellvorrichtung bzw. der hinteren Querstrebe auszukommen und diese läßt sich durch Einstellen vorgegebener Maße auf die Abmessungen des von den Unterlenkern gebildeten Gelenkviereckes abstimmen.

Weiters ist es möglich sowohl bei Pflügen mit gesonderter hinterer Querstrebe, als auch bei jenen, bei denen eine solche fehlt, diese vorgenannten Einstellungen vorzunehmen.

Besonders vorteilhaft ist es, bei einem Pflug mit einem längenveränderbaren Einstellelement für die Verstellung des Gelenkviereckes des Pfluges, wenn die Einstellvorrichtung so angeordnet ist, daß die Einstellung des Verstellelementes von der Verstellung der Einstellvorrichtung nicht beeinflusst wird.

Je nach dem technischen Aufwand ist es möglich unterschiedliche Einstellvorrichtungen vorzusehen, von denen das hydraulische Verstellmittel das teuerste aber auch das am einfachsten einstellbare bildet.

Bei Anwendung einer hinteren Querstrebe ist es eine besonders günstige Lösung, wenn das Einstellglied zur Einstellung der Vorfurchenbreite an der Querstrebe angelenkt ist. Eine besonders einfache Lösung besteht darin, diese Anlenkung mit der des Einstellelementes des Gelenkviereckes zusammenfallen zu lassen.

Besonders vorteilhaft ist es, wenn die Verbindungsebene der hinteren Schwenkachsen, bei Verstellung des Gelenkviereckes des Pfluges, in ihren Lagen vor und nach der Verstellung, bei gleichbleibender Vorfurchenbreite, im wesentlichen parallel ausgerichtet bleibt.

Die Erfindung wird nachstehend an Hand der Zeichnung einer Ausführungsform beschrieben.

Es zeigt :

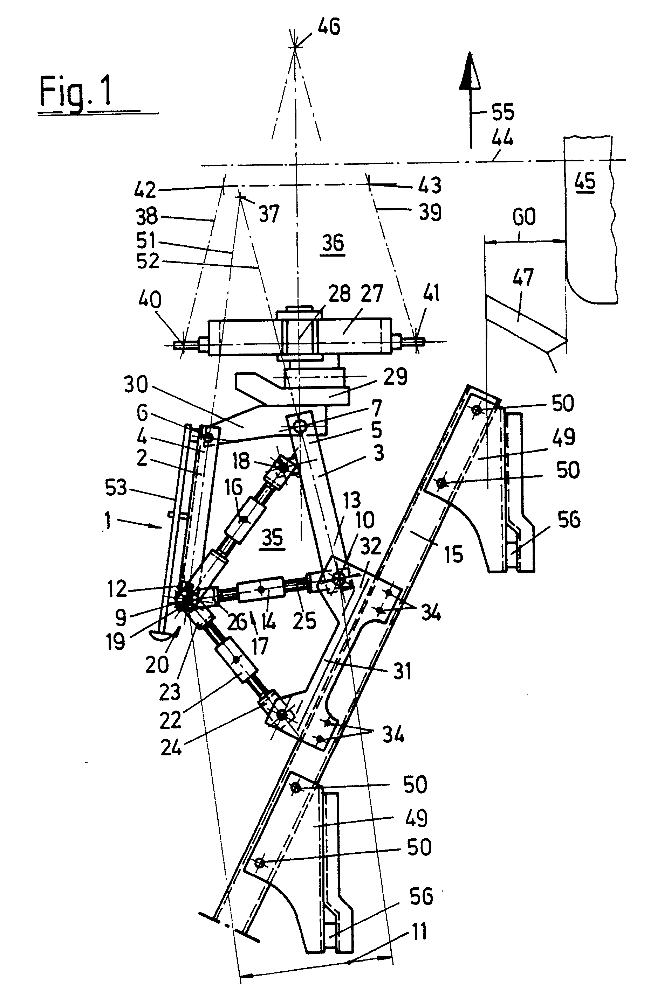

Fig. 1 eine Draufsicht auf einen Pflug, mit einem Gelenkviereck, bei dem die Pflugkörper weggelassen wurden und die Unterlenker und deren Gelenke, ebenso wie die Schlepperachse und der Führungspol schematisch dargestellt sind und

Fig. 2 einen Ausschnitt aus Fig.1 mit Darstellung eines weiteren Ausführungsbeispieles eines Gelenkviereckes.

An einem Schlepper, dessen Hinterachse angedeutet und dessen rechtes Hinterrad 45 teilweise angedeutet ist, sind die am Schlepper angebrachten Gelenke 42 und 43 der beiden Unterlenker 38 und 39 des Gelenkviereckes 36 der Dreipunktanhängung des Schleppers angedeutet, deren koppelseitige Gelenke 40 und 41 sich beiderseits an der Koppel 27 befinden ; der obere Anlenkpunkt ist zur Vereinfachung weggelassen.

Die Verlängerung der Unterlenker 38 und 39 ergibt einen Schnittpunkt in Fahrtrichtung 55, der den Führungspol 46 des Gelenkviereckes 36 bildet.

In der Koppel 27 ist eine Wendeachse 28 gelagert, an der ein Wendekörper 29 pflugseitig befestigt ist, an dem eine seitlich auskragende Konsole 30 angebracht ist, an der ein pflugseitiges Gelenkviereck 35, welches Teil der Vorrichtung 1 zur Verstellung des Drehpoles 37 des Pfluges und des Führungspoles 46 des Schleppers ist, angeordnet ist, dessen Längslenker 2 und 3 an ihren vorderen Enden 4 und 5 mit den vorderen Schwenkachsen 6 und 7 verschwenkbar angelenkt sind.

Die hinteren Schwenkachsen 9 und 10 sind an den hinteren Enden 12 und 13 der Längslenker 2 und 3 an einer hinteren Querstrebe 14 angelenkt. An der Schwenkachse 10 ist mit der Querstrebe 14 der Längslenker 3 an einer vorderen Konsole 32 eines Rahmenhalters 31, der am Rahmen 15 mit den Verschraubungen 34 befestigt ist, angelenkt.

Im Gelenkviereck 35 ist der Abstand zwischen den hinteren Schwenkachsen 9 und 10 größer bemessen als der Abstand der vorderen Schwenkachsen 6 und 7, so daß die verlängerten Längsachsen 51 und 52 der Längslenker 2 und 3 einen Schnittpunkt in Fahrtrichtung 55 ergeben, der den Drehpol 37 des Pfluges bildet.

Die Querstrebe 14 bildet eine längenveränderbare Einstellvorrichtung 17, die aus einem Spannschloß besteht und mit ihrem dem Rahmen 15 abgewandten Ende 26 über die die Anlenkstelle 20 bildende Schwenkachse 9 mit dem hinteren Ende 12 des Längslenkers 2 und mit der Anlenkstelle 19 eines längenveränderbaren Einstellelementes 16 des Gelenkviereckes 35 und mit ihrem dem Rahmen 15 zugewandten Ende über die Schwenkachse 10 mit dem hinteren Ende 13 des Längslenkers 3 gelenkig verbunden ist. Gleichzeitig ist das vordere Ende 23 des längenveränderbaren Einstellgliedes 22 an der Schwenkachse 9 angelenkt.

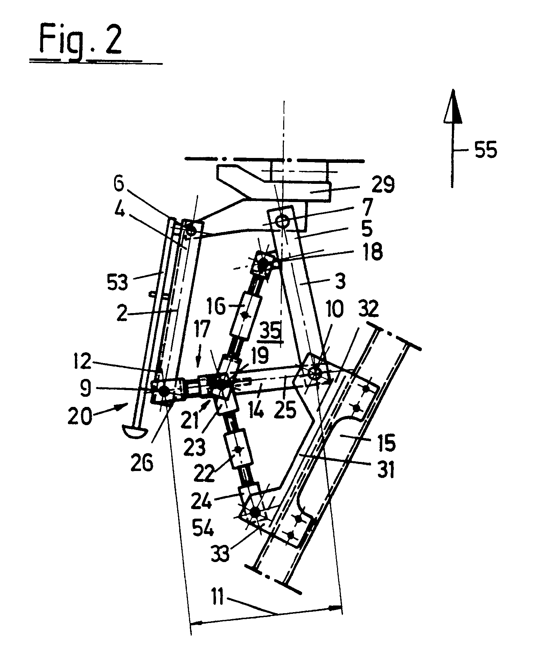

Beim Ausführungsbeispiel in Fig. 2 ist die Querstrebe 14 an ihrem, dem Rahmen 15 abgewandten Ende 26 mit der Lagerstelle 21 der längenveränderbaren Einstellvorrichtung 17 versehen, die andernends über die Schwenkachse 9, die die Anlenkstelle 20 für das hintere Ende 12 des Längslenkers 2 bildet, mit diesem verschwenkbar verbunden ist.

An dem Ende 26 der Querstrebe 14, das dem Rahmen 15 abgewandt ist, ist eine hintere Anlenkstelle 19 eines längenveränderbaren Einstellelementes 16 angeordnet, die gleichzeitig die Anlenkstelle des vorderen Endes 23 des längenveränderbaren Einstellgliedes 22 bildet, das mit dem hinteren Ende 24 an der hinteren Konsole 33 des Rahmenhalters 31 angelenkt an der Schwenkachse 54 abgestützt ist.

Das Einstellelement 16 des Gelenkviereckes 35 ist mit der vorderen Anlenkstelle 18 an dem vorderen Ende 5 des Längslenkers 3 verschwenkbar befestigt.

Am Rahmen 15 des Pfluges sind die Pflugkörperhalter 49 mit Verschraubungen 50 befestigt, an denen die Pflugkörperstiele 56 befestigt sind, die die Pflugkörper tragen. Das Schar 47 des vordersten Pflugkörpers ist angedeutet und die Vorfurchenbreite 60 bezeichnet, welche mit der Schnittbreite der Größe nach, bei richtiger Einstellung gleich ist.

Zur Aufstellung des Pfluges in abgekoppeltem Zustand ist eine Stütze 53 an der Konsole 30 herabschwenkbar angebracht.

Nach der Einstellung der Vorfurchenbreite 60 mit dem Einstellglied 22, erfolgt die Korrektur des Führungspoles 46 mittels des Einstellelementes 16 im Gelenkviereck 35, wobei sich die Vorfurchenbreite 60 nicht oder kaum verändert.

Damit die Einstellung des Führungspoles 46 zu keiner Änderung der Vorfurchenbreite 60 führt, soll der Drehpol 37 in der Grundanordnung des Gespanns mit dem Führungspol 46 zusammenfallen. Dies wird mit der längenveränderbaren Einstellvorrichtung 17 eingestellt, die zwischen hinterer Querstrebe 14 und dem hinteren Ende 12 des Längslenkers 2 angeordnet mit der Schwenkachse 9 als Anlenkstelle 20 ausgebildet ist und durch die Abstandsänderung der Schwenkachsen 9 und 10 voneinander den Abstand des Drehpoles 37 vom Gelenkviereck 35 bestimmt.

Einstellelement 16 und Einstellglied 22 sind in bekannter Weise als Stellschraubspindeln ausgeführt. Die Einstellvorrichtung 17, mit der die Anpassung an die Unterlenkergeometrie des Schleppers erfolgt, ist als Stellschraube ausgebildet, die in die Querstrebe 14 eingesetzt und gesichert wird, doch kann auch diese als Stellschraubspindel oder, wenn die Anforderungen an die Genauigkeit der Einstellung geringer sind, als Schiebeteil ausgebildet sein, das mit Bohrungen versehen ist und die Gegenbohrungen der Querstrebe 14 abgesteckt werden kann.

## Ansprüche

1. Pflug mit einer Vorrichtung (1) zur Verstellung des Drehpoles (37) und des Führungspoles (46), bestehend aus einem Gelenkviereck (35) mit zwei Längslenkern (2, 3), die mit ihren vorderen Enden (4, 5) and der Koppel (27) an lotrechten, vorderen Schwenkachsen (6, 7) in einem Abstand angelenkt sind, der kleiner ist als die Länge der Längslenker (2, 3) und kleiner als der Abstand zwischen den lotrechten hinteren Schwenkachsen (9, 10), mit denen die hinteren Enden (12, 13) der Längslenker (2, 3) an dem Rahmen (15) des Pfluges unmittelbar über eine hintere Querstrebe (14), die gegen den Rahmen (15) mit einem längenveränderbaren Einstellglied (22) gelenkig abgestützt ist, angelenkt sind und aus einem längenveränderbaren Einstellelement (16), das zwischen diagonal gegenüberliegenden Schwenkachsen (7, 9) oder benachbarten Teilen (3, 14) des Gelenkviereckes (35) gelenkig angeordnet ist, dadurch gekennzeichnet, daß der Abstand (11) zwischen den lotrechen hinteren Schwenkachsen (9, 10) stufenlos oder feinstufig mittels einer längeveränderbaren Einstellvorrichtung (17) entsprechend den Abmessungen des Gelenkviereckes (36) des Schleppers veränderbar ist.

2. Pflug nach Anspruch 1, dadurch gekennzeichnet, daß die längenveränderbare Einstellvorrichtung (17) zwischen der Schwenkachse (9) des Längslenkers (2) der vom Rahmen abgewandt ist und dem Rahmen (15) oder der hinteren Querstrebe (14) angebracht ist.

3. Pflug nach einem oder mehreren der vorhergehenden Ansprüche, dadurch gekennzeichnet, daß die längenveränderbare Einstellvorrichtung (17) zwischen der Schwenkachse (9) und der hinteren Anlenkstelle (19) des längenveränderbaren Einstellelementes (16) angeordnet ist.

4. Pflug nach einem oder mehreren der vorhergehenden Ansprüche, dadurch gekennzeichnet, daß die längenveränderbare Einstellvorrichtung (17) aus einem auswechselbaren Distanzstück, oder aus einem Schiebestück mit Absteckbohrungen, die in wenigstens einer Asteckbohrung am Rahmen (15) oder an der hinteren Querstrebe (14) absteckbar sind, oder aus einer Schraubspindel, oder aus einem hydraulischen Verstellmittel besteht.

5. Pflug nach einem oder mehreren der vorhergehenden Ansprüche, dadurch gekennzeichnet, daß der Abstand (11) zwischen den hinteren Schwenkachsen (9, 10) der Längslenker (2, 3) von der längenveränderbaren Einstellvorrichtung (17) und der hinteren Querstrebe (14) überbrückt wird, an deren, die längenveränderbare Einstellvorrichtung (17) tragenden Ende (26) das vordere Ende (23) des längenveränderbaren Einstellgliedes (22) angelenkt ist, das mit dem hinteren Ende (24) am Rahmen (15) angelenkt ist.

6. Pflug nach dem vorhergehenden Anspruch, dadurch gekennzeichnet, daß an der hinteren Anlenkstelle (19) des längenveränderbaren Einstellelementes (16) auf der Querstrebe (14) das längenveränderbare Einstellglied (22) mit dem vorderen Ende (23) angelenkt ist.

7. Pflug nach einem oder mehreren der vorhergehenden Ansprüche, dadurch gekennzeichnet, daß das Gelenkviereck (35) des Pfluges Abmessungen aufweist, bei denen die hinteren Schwenkachsen (9, 10), vor und hinter einer Verstellung des selben mit dem Einstellelement (16) in dessen Verstellbereich, bei gleichbleibender Vorfurchenbreite, Lagen zueinander einnehmen, in denen deren Verbindungsebene (25) im wesentlichen parallel ausgerichtet bleibt.

## Claims

1. Plough with a device (1) for displacing the centre of rotation (37) and the centre of guiding (46), consisting of a four-bar mechanism (35) with two longitudinal guide bars (2, 3), whose front ends (4, 5) are pivotably connected to the coupler (27) at vertical, front pivotal axes (6, 7) and at a distance which is smaller than the length of the longitudinal guide bars (2, 3) and smaller than the distance between the vertical, rear pivotal axes (9, 10), to which the rear ends (12, 13) of the longitudinal guide bars (2, 3) are pivotably connected to the frame (15) of the plough directly via a rear transverse strut (14), which is supported against the frame (15) with a length-variable adjusting member (22), the device also consisting of a length-variable adjusting element (16), which is pivotably mounted between diagonally opposite pivotal axes (7, 9) or adjacent parts (3, 14) of the four-bar mechanism (35), characterised in that the distance (11) between the vertical, rear pivotal axes (9, 10) is variable in an infinitely or sensitively variable manner by means of a length-variable adjusting mechanism (17) according to the dimensions of the four-bar mechanism (36) of the tractor.

2. Plough according to claim 1, characterised in that the length-variable adjusting mechanism (17) is mounted between the pivotal axis (9) of the longitudinal guide bar (2) remote from the frame and the frame (15) itself or the rear transverse strut (14) on the frame or the rear transverse strut (14).

3. Plough according to one or more of the preceding claims, characterised in that the length-variable adjusting mechanism (17) is mounted between the pivotal axis (9) and the rear pivotal point (19) of the length-variable adjusting element (16).

4. Plough according to one or more of the preceding claims, characterised in that the length-variable adjusting mechanism (17) consists of an exchangeable spacer or of a slide member with locating bores, which can be aligned in at least one locating bore on the frame (15) or on the rear transverse strut (14), or of a threaded spindle, or of a hydraulic means of displacement.

5. Plough according to one or more of the preceding claims, characterised in that the distance (11) between the rear pivotal axes (9, 10) of the longitudinal guide bars (2, 3) is bridged by the length-variable adjusting mechanism (17) and the rear transverse strut (14), to whose end (26) carrying the length-variable adjusting mechanism (17) the front end (23) of the length-variable adjusting member (22) is pivotably connected, the rear end (24) of said length-variable adjusting member being pivotably connected to the frame (15).

6. Plough according to one or more of the preceding claims, characterised in that the front end (23) of the length-variable adjusting member (22) is pivotably connected to the rear pivotal point (19) of the length-variable adjusting element (16) on the transverse strut (14).

7. Plough according to one or more of the preceding claims, characterised in that the four-bar mechanism (35) of the plough has dimensions such that the rear pivotal axes (9, 10), before and after displacement of same with the adjusting element (16), in the displacement range of the latter and with a constant forward furrowing breadth, assume relative positions in which their plane of connexion (25) remains oriented substantially parallel.

## Revendications

1. Charrue équipée d'un dispositif (1) pour ajuster le pôle de rotation (37) et le pôle de guidage (46), comprenant un quadrilatère d'articulation (35) muni de deux bras oscillants longitudinaux (2, 3) qui sont articulés par leurs extrémités antérieures (4, 5) sur la bielle (27), sur des axes de pivotement antérieurs verticaux (6, 7), à une distance qui est plus petite que la longueur des bras oscillants longitudinaux (2, 3), et plus petite que la distance comprise entre les axes de pivotement postérieurs verticaux (9, 10) par lesquels les extrémités postérieures (12, 13) des bras oscillants longitudinaux (2, 3) sont articulées, sur l'age (15) de la charrue, directement par l'intermédiaire d'une traverse postérieure (14) qui prend appui de manière articulée, contre l'age (15), par un organe de réglage (22) de longueur variable ; et d'un élément de réglage (16) de longueur variable, qui est intercalé de manière articulée entre des axes de pivotement (7, 9) diagonalement opposés, ou entre des parties voisines (3, 14) du quadrilatère d'articulation (35), caractérisée par le fait que la distance (11) entre les axes de pivotement postérieurs verticaux (9, 10) peut être modifiée, en continu ou par échelons d'une manière précise, au moyen d'un dispositif de réglage (17) de longueur variable, en concordance avec les cotes du quadrilatère d'articulation (36) du tracteur.

2. Charrue selon la revendication 1, caractérisée par le fait que le dispositif de réglage (17) de longueur variable est installé entre l'axe de pivotement (9) du bras oscillant longitudinal (2) qui est tourné à l'opposé de l'age, et ledit age (15) ou la traverse postérieure (14).

3. Charrue selon l'une ou plusieurs des revendications précédentes, caractérisée par le fait que le dispositif de réglage (17) de longueur variable est intercalé entre l'axe de pivotement (9) et la zone postérieure d'articulation (19) de l'élément de réglage (16) de longueur variable.

4. Charrue selon l'une ou plusieurs des revendications précédentes, caractérisée par le fait que le dispositif de réglage (17) de longueur variable est constitué d'une pièce d'espacement interchangeable ou d'une pièce coulissante munie de perçages d'emboîtement, qui peuvent être enfichées dans au moins un perçage d'emboîtement pratiqué sur l'age (15) ou sur la traverse postérieure (14), ou bien d'une broche filetée, ou bien d'un moyen d'ajustement hydraulique.

5. Charrue selon l'une ou plusieurs des revendications précédentes, caractérisée par le fait que la distance (11), comprise entre les axes de pivotement postérieurs (9, 10) des bras oscillants longitudinaux (2, 3), est comblée par le dispositif de réglage (17) de longueur variable et par la traverse postérieure (14) sur l'extrémité (26) de laquelle, portant le dispositif de réglage (17) de longueur variable, est articulée l'extrémité antérieure (23) de l'organe de réglage (22) de longueur variable, qui est articulé sur l'age (15) par l'extrémité postérieure (24).

6. Charrue selon la revendication précédente, caractérisée par le fait que l'organe de réglage (22) de longueur variable est articulé, par l'extrémité antérieure (23), dans la zone postérieure d'articulation (19) de l'élément de réglage (16) de longueur variable sur la traverse (14).

7. Charrue selon l'une ou plusieurs des revendications précédentes, caractérisée par le fait que le quadrilatère d'articulation (35) de la charrue présente des dimensions en présence desquelles, avant et après un ajustement dudit quadrilatère avec l'élément de réglage (16) dans la plage de réglage de ce dernier, lorsque la largeur du sillon avant est constante, les axes de pivotement postérieurs (9, 10) prennent mutuellement des positions dans lesquelles leur plan de liaison (25) demeure, pour l'essentiel, orienté parallèlement.

Fig.1

# Fig. 2